(19) Europäisches Patentamt / European Patent Office / Office européen des brevets

(11) **EP 3 312 754 B1**

(12) **EUROPÄISCHE PATENTSCHRIFT**

(45) Veröffentlichungstag und Bekanntmachung des Hinweises auf die Patenterteilung:
**15.05.2019 Patentblatt 2019/20**

(51) Int Cl.:
***G06F 21/46*** *(2013.01)*

(21) Anmeldenummer: **16195000.1**

(22) Anmeldetag: **21.10.2016**

(54) **VERFAHREN ZUR PASSWORT-ERZEUGUNG**

METHOD FOR PASSWORD GENERATION

PROCÉDÉ DE GÉNÉRATION DE MOTS DE PASSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.04.2018 Patentblatt 2018/17**

(73) Patentinhaber: **Ersek, Otto**
**1100 Wien (AT)**

(72) Erfinder: **Ersek, Otto**
**1100 Wien (AT)**

(74) Vertreter: **Ellmeyer, Wolfgang**
**Häupl & Ellmeyer KG**
**Patentanwaltskanzlei**
**Mariahilfer Strasse 50**
**1070 Wien (AT)**

(56) Entgegenhaltungen:
GB-A- 2 344 977        US-A- 6 141 760
US-A1- 2004 025 026

• **SCHNEIER B ED - SCHNEIER B: "APPLIED CRYPTOGRAPHY, PASSAGE", 1. Januar 1996 (1996-01-01), APPLIED CRYPTOGRAPHY : PROTOCOLS, ALGORITHMS AND SOURCE CODE IN C, JOHN WILEY & SONS, NEW YORK [U.A.], PAGE(S) 173 - 175, XP000864254, ISBN: 978-0-471-11709-4 * Seite 174 ***

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur reproduzierbaren Erzeugung eines Passwortes.

Passwörter werden zur sicheren Authentifizierung der legitimen Benützer in einem Datenverarbeitungssystem verwendet. Diese Passwörter sind aber "linear", das heißt, sie werden in ein Eingabefeld eingetragen. Im Rahmen der Erfindung besteht keine Einschränkung hinsichtlich der Art und des Aufbaus des Systems, in dem das Passwort angewandt wird.

Beispiel eines herkömmlichen Passwortes: Ersek@1979

Mit diesem kann z.B. der Zugang zu einem Betriebssystem eines Rechners ermöglicht werden.

Benützer werden meistens ersucht, Passwörter nach bestimmten Schemata zu generieren:

1) das Passwort soll eine bestimmte Anzahl an Zeichen enthalten (z.B. 10 bis 30 Zeichen)

2) Bestimmte Zeichen (Alphabet = mögliche Zeichen) müssen verwendet werden

a) Groß/Kleinbuchstaben (A-Z, a-z)
b) Zahlen (0-9)
c) Sonderzeichen (!§$%&(._-@ etc)

Merkbar sind solche Passwörter in der Regel nicht mehr und werden deshalb niedergeschrieben oder vergessen, was die Sicherheit beeinträchtigt.

Tabelle 1: Zeichensatz (Alphabet), Anzahl der möglichen Symbole und deren Entropien (gerundet)

| Alphabet | Anzahl der Symbole | Entropie/Zeichen |
|---|---|---|
| Zahlen (0-9) | 10 | 3,32 |
| Hexadezimal (0-9, A-F) | 16 | 4,00 |
| A-Z oder a-z | 26 | 4,70 |
| Alphanumerisch (a-z oder A-Z, 0-9) | 36 | 5,17 |
| Alphanumerisch (a-z, A-Z, 0-9) | 62 | 5,95 |
| ASCII druckbare Zeichen ohne"Leerzeichen" | 94 | 6,55 |
| ASCII druckbare Zeichen mit "Leerzeichen" | 95 | 6,57 |

Unter Entropie ist der Logarithmus zur Basis 2 zu verstehen.

Beispiel:

Für Zahlen: $2^{3,32} \rightarrow 10$, also braucht man im schlimmsten Fall 10 Versuche um ein einstelliges Zahlenpasswort zu erraten.

Für ein zweistelliges Zahlenpasswort gilt: $2^{3,32} \rightarrow 100$ (00 bis 99) Beschränkt man sich z.B. auf den Zeichensatz der Zahlen (d.h. akzeptiert man nur Zahlen als Passwörter wie bei PINcodes Handy, Bankomat, etc) so wird pro Zeichen 3,32 bit an Entropie/Sicherheit erreicht.

Tabelle 2: Entropie für Zahlencodes

| Zeichensatz | Passwort-Länge | Entropie/Passwort | Möglichkeiten |
|---|---|---|---|
| Zahlen (0-9) | 1 | 3,32 | 1,00E+01 |
| Zahlen (0-9) | 2 | 6,64 | 1,00E+02 |
| Zahlen (0-9) | 3 | 9,97 | 1,00E+03 |
| Zahlen (0-9) | 4 | 13,29 | 1,00E+04 |
| Zahlen (0-9) | 5 | 16,61 | 1,00E+05 |
| Zahlen (0-9) | 6 | 19,93 | 1,00E+06 |
| Zahlen (0-9) | 7 | 23,25 | 1,00E+07 |
| Zahlen (0-9) | 8 | 26,58 | 1,00E+08 |
| Zahlen (0-9) | 9 | 29,90 | 1,00E+09 |

Für Telebanking, E-mail, Computerlogins verwendet man einen größeren Zeichensatz um höhere Entropie mit weniger Zeichen zu erreichen, im Idealfall ASCII druckbare Zeichen mit "Leerzeichen".

Dazu ist zu bemerken, dass manchmal bestimmte Zeichen ausgeschlossen werden, da diese für die zugrundeliegende Programmiersprache reserviert sind.

Somit hat man im Idealfall folgende Entropien: "

Tabelle 3: Entropie für ASCII druckbare Zeichen + "Leerzeichen"

| Zeichensatz | Passwort-Länge | Entropie/Passwort | Möglichkeiten |
|---|---|---|---|
| ASCII mit "Leerzeichen" | 1 | 6,57 | 9,50E+01 |
| ASCII mit "Leerzeichen" | 2 | 13,14 | 9,03E+03 |
| ASCII mit "Leerzeichen" | 3 | 19,71 | 8,57E+05 |
| ASCII mit "Leerzeichen" | 4 | 26,28 | 8,15E+07 |
| ASCII mit "Leerzeichen" | 5 | 32,85 | 7,74E+09 |
| ASCII mit "Leerzeichen" | 6 | 39,42 | 7,35E+11 |
| ASCII mit "Leerzeichen" | 7 | 45,99 | 6,98E+13 |
| ASCII mit "Leerzeichen" | 8 | 52,56 | 6,63E+15 |
| ASCII mit "Leerzeichen" | 9 | 59,13 | 6,30E+17 |
| ASCII mit "Leerzeichen" | 10 | 65,70 | 5,99E+19 |
| ASCII mit "Leerzeichen" | 15 | 98,55 | 4,63E+29 |
| ASCII mit "Leerzeichen" | 19 | 124,83 | 3,77E+37 |
| ASCII mit "Leerzeichen" | 20 | 131,40 | 3,58E+39 |
| ASCII mit "Leerzeichen" | 25 | 164,25 | 2,77E+49 |
| ASCII mit "Leerzeichen" | 30 | 197,10 | 2,15E+59 |
| ASCII mit "Leerzeichen" | 35 | 229,94 | 1,66E+69 |
| ASCII mit "Leerzeichen" | 39 | 256,22 | 1,35E+77 |
| ASCII mit "Leerzeichen" | 40 | 262,79 | 1,29E+79 |
| ASCII mit "Leerzeichen" | 45 | 295,64 | 9,94E+88 |
| ASCII mit "Leerzeichen" | 50 | 328,49 | 7,69E+98 |
| ASCII mit "Leerzeichen" | 55 | 361,34 | 5,95E+108 |
| ASCII mit "Leerzeichen" | 60 | 394,19 | 4,61E+118 |
| ASCII mit "Leerzeichen" | 65 | 427,04 | 3,56E+128 |
| ASCII mit "Leerzeichen" | 70 | 459,89 | 2,76E+138 |
| ASCII mit "Leerzeichen" | 75 | 492,74 | 2,13E+148 |
| ASCII mit "Leerzeichen" | 78 | 512,45 | 1,83E+154 |

Bevorzugte Passwortsicherheitsstufen bzw. Entropien sind 128bit, 256bit und 512bit.

128bit sind für Authentifizierungen mit niedrigem Sicherheitsgrad geeignet, z.B. Webseiten die keine Kreditkarteninformationen des Benützers enthalten.

256bit sind für sichere Authentifizierungen geeignet. Z.B.: Webseiten die Kreditkarteninformationen des Benützers enthalten z.B. Amazon, Paypal, oder Telebanking Logins, Privatunternehmen mit durchschnittlicher Sicherheitsstufe.

512bit sind extrem sichere Passwörter die für Passwortdatenbanken empfohlen werden bzw. Finanzsektor, Öffentlicher Sektor, etc,..

Leider sind die Anforderungen der Passwortlänge für 256bit 39 Zeichen und für 512bit gar 78 Zeichen. Solche Passwörter sind in der Regel nicht mehr merkbar und werden deshalb von den Benützern niedergeschrieben oder vergessen, was die Sicherheit beeinträchtigt. Oder aber es wird eine Software/Passwortmanager benutzt, wo diese "sicheren" Passwörter gespeichert werden. Mit der Speicherung ist aber die Gefahr eines Zugriffes durch unbefugte Dritte gegeben.

Daher werden üblicherweise Passwörter mit einer Länge von maximal 4 oder 5 Zeichen verwendet, damit sie der Benützer im Gedächtnis behalten kann und er nicht auf eine mit Unsicherheiten verbundene Speicherung zurückgreifen muss. Allerdings ergeben sich für derartige Passwörter zu geringe Sicherheitsgrade.

Ferner ist aus der DE102014204332 ein Verfahren bekannt, bei dem ein Masterpasswort und ein Dienstname eines passwortgeschützten Dienstes eingegeben werden und aus dem Masterpasswort und dem Dienstnamen ein dienstspezifisches Passwort erzeugt wird, wobei aus dem Masterpasswort und einem gegebenen Dienstnamen stets das gleiche dienstspezifische Passwort erzeugt wird. Der Benutzer muss sich nur ein Passwort, nämlich das Masterpasswort, merken und der Passwortgenerator kann aus dem Masterpasswort und dem Dienstnamen für jeden vom Benutzer genutzten Dienst ein gesondertes dienstspezifisches Passwort erzeugen.

Auch die mit diesem Verfahren erzielbare Sicherheitsstufe ist zu gering, da die zusätzliche Verschlüsselung durch den Dienstnamen eine zu geringe Entropie ergibt bzw. die Menge der Dienstnamen sehr eingeschränkt ist.

Aufgabe der Erfindung ist es daher, ein eingangs genanntes Verfahren zur reproduzierbaren Erzeugung eines Passwortes dahingehend zu verbessern, dass der Benutzer sich eine nur geringe Anzahl an Daten im Gedächtnis behalten muss, um immer wieder dasselbe Passwort mit hoher Sicherheitsstufe erzeugen zu können.

Erfindungsgemäß wird dies durch die folgenden Schritte erreicht:

- Auswahl von einer oder mehreren Dateien aus einer Vielzahl von aus aneinandergereihten Zeichen gebildeten Dateien, welche nur dem Passwort-Inhaber bekannt sind,
- Kopieren der einen oder mehreren ausgewählten Dateien in eine Ausgangstext-Datei, wobei sich eine Gesamtlänge von N Zeichen ergibt,
- Ändern der Ausgangstext-Datei durch eine Anzahl d von vordefinierten Änderungen an ausgewählten Positionen an der Ausgangstext-Datei, welche Änderungen nur dem Passwort-Inhaber bekannt sind,
- Anwenden einer oder mehrerer kryptologischen Hash-Funktionen in einer vordefinierten Anzahl von Iterationen auf die geänderte Ausgangstext-Datei, um als Ergebnis das Passwort zu erhalten.

Das erfindungsgemäße Verfahren beruht somit darauf, dass in einer Datei mit einer sehr hohen Gesamtzeichenlänge an bestimmten Stellen, die nur dem Passwort-Inhaber bekannt sind, definierte Änderungen vorgenommen werden, und auf die sich daraus ergebende Zeichenfolge eine kryptologische Hash-Funktion angewandt wird. Kleine Änderungen ergeben aufgrund der Definition der Hash-Funktionen bereits große Änderungen, sodass ähnliche Zeichenfolgen komplett unterschiedliche Ergebnisse liefern. Auch wenn die sehr große Ausgangstext-Datei gespeichert ist und somit für unautorisierte Dritte zugänglich gemacht werden kann, sind die an ihr vorgenommenen Änderungen, die im System nicht gespeichert sind, nur dem Passwort-Inhaber bekannt.

Es existiert eine Vielzahl bekannter Kryptographischer Hashfunktionen SHA2, SHA3, Argon2, etc.

Ein bekannter einfacher Authentifizierungsvorgang besteht darin, dass ein Benutzer ein "lineares" Passwort von z.B. 6 Zeichen eintippt, somit ca. $6 \cdot 6{,}57 = 39$bit Sicherheit dieses "lineare" Passwort wird durch eine Vielzahl an Iterationen über eine Hashfunktion geschickt die dann einen String von 256bit (bei SHA-256), 512bit (bei SHA-512) oder gar 1024bit (bei SHA-3) errechnet. Die String-Länge täuscht aber: denn obwohl das Resultat 256bit ist, wurden nur 39bit an Entropie verwendet, um dies zu erreichen. Also muss ein Angreifer "nur" $2^{39} = 7{,}35 \cdot 10^{11}$ "lineare" Passwörter ausprobieren, um den richtigen 256bit-Schlüssel zu finden. Mittlerweile sind Datenbanken, Rainbow-Tables, spezialisierte Software, etc. im Umlauf um solche schwachen Passwörter zu "errechnen".

In einem beliebigen Text mit einer Gesamtanzahl an N Zeichen inklusive Abstand bzw. Leerzeichen errechnet sich die Positionsentropie P zu

$$P = \frac{\log N}{\log 2}$$

Bei einer Textdatei mit $2^{20} = 1.024.576$ Zeichen ist $P = \frac{\log 1.024.576}{\log 2} = 20$bit

Ein Ausführungsbeispiel der Erfindung kann darin bestehen, dass die Zeichen durch alphanumerische Zeichen gebildet sind.

Bevorzugt finden alphabetische Zeichen deswegen Anwendung, weil auf diese Weise für den Passwort-Inhaber bestimmte Stellen durch den Zusammenhang leichter im Gedächtnis bleiben.

In einem definierten Alphabet mit Z unterschiedlichen Zeichen ist die Alphabetentropie A gleich

$$A = \frac{\log Z}{\log 2}$$

Z.B.: Entropie alphanumerisch mit 62 Zeichen: $\frac{\log 62}{\log 2} = 5{,}95$bit

Das alphanumerische Alphabet soll mit zwei zusätzlichen Zeichen erweitert werden.

zB: "+" und "@" so erhält man ein Alphabet mit 64 Zeichen somit genau 6bit an Entropie.

ABCDEFGHIJKLMNOPQRSTUVWXYZ+abcdefghijklmnopqrstuvwxyz@0123456789

$$\text{Grundalphabetentropie} = G = \frac{\log 64}{\log 2} = 6$$

Für die weiteren Betrachtungen wird dieses Grundalphabet mit 6bit Entropie/Zeichen verwendet, um runde Zahlen bei den weiteren Berechnungen zu erhalten.

Noch höhere Sicherheit als beim Grundalphabet kann z.B. durch alle 95 druckbaren Zeichen verwenden werden, welche eine Entropie von 6,57 ergeben.

Eine andere Variante der Erfindung kann darin bestehen, dass die Zeichen durch druckbare beziehungsweise erlaubte Zeichen mit Leerzeichen gebildet sind.

Das erfindungsgemäße Verfahren ist aber auf keine besondere Art von Zeichensatz eingeschränkt, der je nach Bedarf in beliebiger Weise variiert werden kann.

Um aus **n** Elementen **k** auszuwählen, wobei sich die Elemente wiederholen dürfen, hat man insgesamt $V(n, k) = n^k$ Möglichkeiten

Zum Beispiel $n = 2^{12} = 4.096$ und $k = 7$ ergibt $V(2^{12}, 7) = 2^{12 \times 7}$ Möglichkeiten.

$$\text{VAR}(2^{12}, 7) = \frac{\log V(2^{12},7)}{\log 2} = 84\text{bit}$$

Das heißt, wenn man aus 4096 Dateien 7 auswählen muss, wobei die Reihenfolge von Bedeutung ist, und sich die Dateien wiederholen dürfen, hat man einmalig einen Bonus von 84bit.

Die Hashfunktionen ändern ihren Wert durch den "Lawineneffekt" bei auch noch so kleiner Änderung einer Datei grundlegend.

Bei der Übertragung von Daten sei z.B. bei einem fehlerhaften Download einer Datei eine einzige 0 durch eine 1 verändert worden. Um dies zu überprüfen, berechnet man den Hashwert der Datei und vergleicht ihn mit dem Soll-Hashwert, beide Werte sind gänzlich unterschiedlich, und somit muss ein erneuter Download-Vorgang gestartet werden.

Beim erfindungsgemäßen Verfahren wird diese sichere Passwortgenerierung verwendet, um von "linearen" Passwörtern zu "nicht-linearen" Passwörtern überzugehen.

**BEISPIEL 1**

Der Passwort-Inhaber wählt eine oder mehrere Dateien mit einer Gesamtlänge von N Zeichen als Ausgangstext.

Die einzelnen Dateien werden in eine neue Ausgangstext-Datei hintereinander hineinkopiert.

Die einzelnen Dateien sind gespeichert und dürfen nicht verloren gehen, sie dürften sogar öffentlich gemacht werden. N soll möglichst groß sein > $2^{20}$ = 1.024.576 Zeichen, Positionsentropie = 20

Nun erfolgt das Ändern der Ausgangstext-Datei durch eine Anzahl d von vordefinierten Änderungen an ausgewählten Positionen an der Ausgangstext-Datei, welche Änderungen nur dem Passwort-Inhaber bekannt sind.

Der Passwort-Inhaber ändert dabei die Ausgangstext-Datei so, dass die gewünschte Entropie, wie in Tabelle 3 angegeben, erreicht wird.

Aufgrund der insgesamt **d** Änderungen in der Ausgangstext-Datei ergibt sich die so erreichte Gesamtentropie somit zu:

$$\text{Gesamtentropie} = E = (P + G) \cdot d + \text{VAR}(n, k)$$

Bei einem einzigen Ausgangstext, VAR(1, 1) = 0 mit $2^{20}$ = 1.024.576 Zeichen → P = 20

Unter der Verwendung des Grundalphabets G = 6, erhält man mit einer einzigen Änderung der benutzten Datei 20+6=26bit Entropie.

Die geänderte Ausgangstext-Datei wird dann einer fest definierten Vielzahl an Iterationen über eine oder mehrere Hashfunktionen geschickt, wodurch ein String von 256bit (bei SHA-256), 512bit (bei SHA-512) oder gar 1024bit (bei SHA-3) errechnet wird.

Das daraus erzielte Ergebnis ist ein Passwort mit der gewünschten Güte. Der Passwort-Inhaber muss sich das Passwort selbst **nicht** mehr merken. Lediglich die Auswahl des Ausgangstextes und die im Text durchgeführten Änderungen und Stellen, an denen die Änderungen durchzuführen sind, müssen im Gedächtnis behalten werden.

Gemäß einer weiteren Ausführungsform der Erfindung kann vorgesehen sein, dass die vordefinierten Änderungen eine oder mehrere Änderungen der nachfolgend aufgezählten Art sind:

- Einfügen eines beliebigen Zeichens in die N Zeichen
- Ersetzen eines der N Zeichen durch ein beliebiges Zeichen
- Löschen von einem oder mehreren Zeichen der N Zeichen
- Kopieren von einem oder mehreren Zeichen der N Zeichen und Einfügen an einer anderen Stelle.

Weitere Beispiele von definierten Änderungen sind:

- In einem Bereich aus mehreren Zeichen die Groß/Kleinschreibung ändern
- Einen Bereich aus mehreren Zeichen umkehren, z.B. rückwärts schreiben
- Bei strukturierten Texten Zeilen im Ausgangstext vertauschen
- Seiten vertauschen

Alle diese Änderungen haben natürlich immer eine andere Auswirkung auf den Ausgangstext. Beziehungsweise wirken sie anders auf die Entropie der geänderten Ausgangsdatei.

Die verwendete Software kann den Benutzer über die exakt erreichte Entropie informieren.

Die verwendeten Änderungen können im Rahmen der Erfindung frei definiert werden.

**BEISPIEL 2:**

Angenommen folgender Text wurde aus 5 Textdateien von $2^{18} = 262.144$ erstellt.

P = 10, somit in Summe $2^{10} = 1.024$ Zeichen

Ausgangstext:

73+ABCDEFGHIJKLMNOPQRSTUVWXYZ+73
28+ABCDEFGHIJKLMNOPQRSTUVWXYZ+28
79+ABCDEFGHIJKLMNOPQRSTUVWXYZ+79
64+ABCDEFGHIJKLMNOPQRSTUVWXYZ+64
43+ABCDEFGHIJKLMNOPQRSTUVWXYZ+43
71+ABCDEFGHIJKLMNOPQRSTUVWXYZ+71
75+ABCDEFGHIJKLMNOPQRSTUVWXYZ+75
47+ABCDEFGHIJKLMNOPQRSTUVWXYZ+47
84+ABCDEFGHIJKLMNOPQRSTUVWXYZ+84
24+ABCDEFGHIJKLMNOPQRSTUVWXYZ+24
7 0+ABCDEFGHIJKLMNOPQRSTUVWXYZ+70
62+ABCDEFGHIJKLMNOPQRSTUVWXYZ+62
21+ABCDEFGHIJKLMNOPQRSTUVWXYZ+21
22+ABCDEFGHIJKLMNOPQRSTUVWXYZ+22
94+ABCDEFGHIJKLMNOPQRSTUVWXYZ+94
51+ABCDEFGHIJKLMNOPQRSTUVWXYZ+51
83+ABCDEFGHIJKLMNOPQRSTUVWXYZ+83
31+ABCDEFGHIJKLMNOPQRSTUVWXYZ+31
33+ABCDEFGHIJKLMNOPQRSTUVWXYZ+33
51+ABCDEFGHIJKLMNOPQRSTUVWXYZ+51
13+ABCDEFGHIJKLMNOPQRSTUVWXYZ+13
62+ABCDEFGHIJKLMNOPQRSTUVWXYZ+62
18+ABCDEFGHIJKLMNOPQRSTUVWXYZ+18
82+ABCDEFGHIJKLMNOPQRSTUVWXYZ+82
94+ABCDEFGHIJKLMNOPQRSTUVWXYZ+94
22+ABCDEFGHIJKLMNOPQRSTUVWXYZ+22
23+ABCDEFGHIJKLMNOPQRSTUVWXYZ+23
12+ABCDEFGHIJKLMNOPQRSTUVWXYZ+12
10+ABCDEFGHIJKLMNOPQRSTUVWXYZ+10
41+ABCDEFGHIJKLMNOPQRSTUVWXYZ+41
18+ABCDEFGHIJKLMNOPQRSTUVWXYZ+18

99+ABCDEFGHIJKLMNOPQRSTUVWXYZ+99

Die erfindungsgemäße Anwendung der kryptographischen Hash-Funktion SHA-512 liefert folgenden HEX-Wert:

**0B5467B27F1A429903B971775D13D3669053D28173AB126E326B32366A4**

**9547F743393616A775B0E49E5C50057120CB8828EDD912F402CAF76E3C5 97E7668099**

**BEISPIEL 3:**

Geänderte Ausgangstextdatei mit dem linearen Passwort:

<div align="center">

**Ersek@1979**

73+ABCDEFGHIJKLMNOPQRSTUVWXYZ+73
28+ABCDEFGHIJKLMNOPQRSTUVWXYZ+28
79+ABCDEFGHIJKLMNOPQRSTUVWXYZ+79
64+ABCDEFGHIJKLMNOPQRSTUVWXYZ+64
43+ABCDEFGHIJKLMNOPQRSTUVWXYZ+43
7E1+ABCDEFGHIJKLMNOPQRSTUVWXYZ+71
75+ABCDEFGHIJKLMNOPQRSTUVWXYZ+75
47+ABCDEFGHIJKLMNOPQRSTUVWXYZ+47
84+ABCDEFGHIJKLMNOPQRSTUVWXYZ+84
24+ABCDEFGHIJKLMNOPQRSTUVWXY@+24
70+ABCDEFGHIJKLMNOPQRSTUVWXYZ+70
62+ABCDEFGHIJKLMNOPQRSTUVWXYZ+62
21+ABCDEFGHIJKLMNOPQRSTUVWXYZ+21
22+ABCDEFGHIJKLMNOPQRSTUVWXYZ+22
94+ABCDEFGHIJKLMNOPQRSTUVWXYZ+94
51+ABCDEFGHIJKLMNOPQRSTUVWXYZ+51
83+ABCDEFGHIJKLMNOPQRSTUVWXYZ+83
31+ABCDEFGHIJKLMNOPQRSTUVWXYZ+31
33+ABCDEFGHIJKLMNOPQRSTUVW1XYZ+33
51+ABCDEFGHIJKLMNOPQRSTUVWXYZ+51
13+ABCDEFGHIJKLMNOPQRSTUVWXYZ+13
62+ABCDEFGHIJKLMNOPQRSTUVWXYZ+62
18+ABCDEFGHIJKLMNOPQRSTUVWXYZ+18
82+ABCDEFGHIJKLMNOPQRSTUVW9XYZ+82
94+ABCDEFGHIJKLMNOPQRSTUVWXYZ+94
22+ABCDEFGHIJKLMNOPQRSTUVWXYZ+22
23+ABCDEFGHIJKLMNOPQRSTUVWXYZ+23
12+ABCDEFGHIJKLMNOPQRSTUVWXYZ+12
10+ABCDEFGHIJKLMNOPQRSTUVWXYZ+10
41+ABCDEFGHIJKLMNO7PQRSTUVWXYZ+41
18+ABcCDEFGHIJKLMNOPQRSTUVWXYZ+19
99+ABCDEFGHIJKLMNOPQRSTUVWXYZ+99

</div>

Die Reihenfolge der Pfeile ist unerheblich, dient nur zur Veranschaulichung.

Die nachfolgende Berechnung von Entropie E wurde in diesem Beispiel vereinfacht. Beim Ausgangstext wurde ja durch Hinzufügen einiger Zeichen das P leicht vergrößert, womit aber E leicht größer ausfallen sollte.

$$P = 10, \; A = 6, \; d = 10, \; VAR(2^{18}, \; 5) = 90bit$$

$$E = (P + G) \bullet d + VAR(n, \; k)$$

$$E = 16 \bullet 10 + 90 = 250bit$$

SHA-512 liefert nun (wie erwartet einen ganz unterschiedlichen HEX-Wert)
**6BCA241A892D2E1AE3B6B357D6852236D46464AEB7821792350546B0CC0**
**C1A998388B04FFF108ACF5E65EFD42E1BCD6E0744D74A0F5C86E1D13637 EF3C2249CF**

Damit ein Angreifer eben diesen Wert errechnen kann **muss** er die Schlüsseldatei erstellen. Hierzu gibt es $2^{250} \approx 10^{75}$ Möglichkeiten.

Gemäß einer weiteren Ausführungsform der Erfindung kann vorgesehen sein, dass die Ausgangstext-Datei auf einem lesbaren Text, z.B. einem Werk der Literatur, basieren, wodurch die ausgewählten Positionen der Änderungen für den Passwort-Inhaber leicht merkbar sind.

**BEISPIEL 4:**

Als Datei zur Erstellung der Ausgangstext-Datei wird eine lesbare Textdatei verwendet, die z.B. eine Abfolge von merkbaren Ereignissen beinhaltet.

"Krieg & Frieden" vom Autor Leo Tolstoi Anzahl Zeichen im englischen Text (Source: Project Gutenberg) :

$$3.244.744 \quad P = \frac{\log 3.244.744}{\log 2} = 21,629673228 \quad \text{runden wir einfachheitshalber auf 21 ab}$$

G = 6

VAR(1, 1) = 0bit

Eine Textdatei aus nur einer möglichen Textdatei zu wählen erhöht die Sicherheit nicht. Allein die Änderungen in einer Textdatei ergeben aber einen ausreichenden Sicherheitsgrad.

Wenn in diesem Text an vordefinierten Positionen zehn Zeichen geändert werden, ergibt sich 10 • 27 + 0 = 270bit (>256bit) an Entropie. Um die gleiche Sicherheit mit einem linearen Passwort zu erreichen wären 270/6= 45 Zeichen erforderlich.

Um ein noch sichereres Passwort zu erhalten, müssen z.B. zwanzig Zeichen im Text geändert, wodurch sich 20 • 27 + 0 = 540bit (>512bit) Entropie ergibt. Um die gleiche Sicherheit mit einem linearen Passwort zu erreichen, wären 540/6= 90 Zeichen erforderlich.

Tabelle 4: Entropietabelle für Standardänderungen

| P | P Zeichen | P Seiten | G | E | 256bits | 512bits |
|----|-----------|-------------|---|----|---------|---------|
| 10 | 1.024 | 0,5 | 6 | 16 | 16,0 | 32,0 |
| 15 | 32.768 | 16 | 6 | 21 | 12,2 | 24,4 |
| 20 | 1.048.576 | 512 | 6 | 26 | 9,8 | 19,7 |
| 25 | 3,36E+07 | 16.384 | 6 | 31 | 8,3 | 16,5 |
| 30 | 1,07E+09 | 524.288 | 6 | 36 | 7,1 | 14,2 |
| 35 | 3,44E+10 | 16.777.216 | 6 | 41 | 6,2 | 12,5 |
| 40 | 1,10E+12 | 536.870.912 | 6 | 46 | 5,6 | 11,1 |

Das einfachste Beispiel: P = 10, G = 6, E = 16, VAR(1, 1) = 0 entspricht einer halben A4 Seite (mit 2048 druckbaren Zeichen) und liefert bereits eine höhere Entropie wie "Diceware"

Wie ersichtlich führt P = 30 bereits zu zu vielen Zeichen = eine halbe Million Seiten.
Vorteilhaft erscheint ein P = 20 mit 512 Seiten.

Die Spalten 256bit bzw. 512bit geben die minimalen Zeichenanzahlen an die benötigt werden um die gewünschte Sicherheit zu erreichen, dabei wird der "ungünstige" Fall zugrunde gelegt dass VAR(1, 1) = 0 ist.

Man kann einmalig die Gesamtentropie erhöhen, indem man den Ausgangstext als k von n Sub-dateien definiert.

Die richtige Kombination für E = (P + G) • d + VAR(n, k) muss entsprechend eingestellt werden.

Dabei muss die Bit-länge der verwendeten Hashfunktionen größer sein als E, ansonsten wird das Passwort wieder ungewollt abgeschwächt. Das erfindungsgemäße Verfahren ist bevorzugt zur Anwendung innerhalb einer Software eines beliebigen Rechnersystems gedacht, kann aber auch zu anderen Zwecken dienen.

**Patentansprüche**

1. Verfahren zur reproduzierbaren Erzeugung eines Passwortes, welches die folgenden Schritte umfasst:

- Auswahl von einer oder mehreren Dateien aus einer Vielzahl von aus aneinandergereihten Zeichen gebildeten Dateien, welche nur dem Passwort-Inhaber bekannt sind,
- Kopieren der einen oder mehreren ausgewählten Dateien in eine Ausgangstext-Datei, wobei sich eine Gesamtlänge von N Zeichen ergibt,
- Ändern der Ausgangstext-Datei durch eine Anzahl d von vordefinierten Änderungen an ausgewählten Positionen an der Ausgangstext-Datei, welche Änderungen nur dem Passwort-Inhaber bekannt sind,
- Anwenden einer oder mehrerer kryptologischen Hash-Funktionen in einer vordefinierten Anzahl von Iterationen auf die geänderte Ausgangstext-Datei, um als Ergebnis das Passwort zu erhalten.

2. Verfahren nach Anspruch 1, **dadurch gekennzeichnet, dass** die mehreren Dateien hintereinander in die Ausgangstext-Datei hineinkopiert werden.

3. Verfahren nach Anspruch 1 oder 2, **dadurch gekennzeichnet, dass** die anwendbaren kryptologischen Hash-Funktionen eine oder mehrere aus der aus SHA-2, SHA-3, oder anderen Passwort-Hashfunktionen gebildeten Gruppe ausgewählt sind.

4. Verfahren nach einem der Ansprüche 1, 2 oder 3, **dadurch gekennzeichnet, dass** die vordefinierten Änderungen eine oder mehrere Änderungen der nachfolgend aufgezählten Art sind:

   - Einfügen eines beliebigen Zeichens in die N Zeichen
   - Ersetzen eines der N Zeichen durch ein beliebiges Zeichen
   - Löschen von einem oder mehreren Zeichen der N Zeichen
   - Kopieren von einem oder mehreren Zeichen der N Zeichen und Einfügen an einer anderen Stelle.

5. Verfahren nach einem der Ansprüche 1 bis 4, **dadurch gekennzeichnet, dass** die Zeichen durch alphanumerische Zeichen gebildet sind.

6. Verfahren nach einem der Ansprüche 1 bis 4, **dadurch gekennzeichnet, dass** die Zeichen durch druckbare beziehungsweise erlaubte Zeichen mit Leerzeichen gebildet sind.

7. Verfahren nach einem der vorhergehenden Ansprüche, **dadurch gekennzeichnet, dass** die Ausgangstext-Datei auf einem lesbaren Text, z.B. einem Werk der Literatur, basieren, wodurch die ausgewählten Positionen der Änderungen für den Passwort-Inhaber leicht merkbar sind.

**Claims**

1. A method for reproducibly generating a password, comprising the following steps:

   - selecting one or several files from a plurality of files which consist of stringed characters and are only known to the password owner,
   - copying the one or several selected files into a source text file to obtain a total length of N characters,
   - changing the source text file by a number d of predefined changes at selected positions of the source text file, said changes being only known to the password owner,
   - applying one or several cryptologic hash functions in a predefined number of iterations to the changed source text file to obtain the password as a result.

2. The method according to claim 1, **characterised in that** said several files are copied in sequence into the source text file.

3. The method according to claim 1 or claim 2, **characterised in that** the applicable cryptologic hash functions are one or several selected from a group consisting of SHA-2, SHA3 or other password hash functions.

4. The method according to any one of the claims 1, 2 or 3, **characterised in that** said predefined changes are one or several changes of one of the types listed below:

   - inserting any character among said N characters;
   - replacing one of said N characters by any character;
   - deleting one or several characters from said N characters;

- copying one or several characters of said N characters and inserting them at another position.

**5.** The method according to any one of the claims 1 to 4, **characterised in that** said characters are alphanumeric characters.

**6.** The method according to any one of the claims 1 to 4, **characterised in that** said characters are printable or allowed characters including blanks.

**7.** The method according to any one of the preceding claims, **characterised in that** said source text file is based on a readable text, such as a work of literature, making it easy for the password owner to remember the selected positions of the changes.

**Revendications**

**1.** Procédé pour la génération réproduisible d'un mot de passe, comprenant les étapes suivantes :

- choix d'un ou plusieurs fichiers parmi une pluralité de fichiers composés de caractères enchaînés, connus uniquement au propriétaire du mot de passe,
- copie d'un ou plusieurs parmi les fichiers sélectionnés dans un fichier de texte source pour obtenir une longueur totale de N caractères,
- changement du fichier de texte source par un nombre d de modifications prédéfinies dans des positions sélectionnées du fichier de texte source, les modifications étant connues uniquement au propriétaire du mot de passe,
- application d'une ou plusieurs fonctions de hashage cryptologique(s) au fichier de texte source modifié dans un nombre prédéfini d'itérations pour obtenir le mot de passe comme résultat.

**2.** Procédé selon la revendication 1, **caractérisé en ce que** les plusieurs fichiers sont copiés l'un après l'autre dans le fichier de texte source.

**3.** Procédé selon les revendications 1 ou 2, **caractérisé en ce que** les fonctions de hachage cryptologiques applicables sont une ou plusieurs sélectionnées parmi le groupe comprenant SHA-2, SHA-3 ou d'autres fonctions de hachage de mot de passe.

**4.** Procédé selon l'une quelconque des revendications 1, 2 ou 3, **caractérisé en ce que** les modifications prédéfinies sont une ou plusieurs modifications du type suivant :

- insertion d'un caractère quelconque dans les N caractères ;
- remplacement d'un des N caractères par un caractère quelconque ;
- effacement d'un ou plusieurs caractères des N caractères ;
- copie d'un ou plusieurs caractères des N caractères et insertion dans une autre position.

**5.** Procédé selon l'une quelconque des revendications 1 à 4, **caractérisé en ce que** les caractères sont formés par des caractères alphanumériques.

**6.** Procédé selon l'une quelconque des revendications 1 à 4, caractérisé en ce les caractères sont formés par des caractères imprimables ou autorisés, avec des espaces.

**7.** Procédé selon l'une quelconque des revendications 1 précédentes, **caractérisé en ce que** le fichier de texte source est basé sur un texte lisible, par exemple un oeuvre littéraire, ce qui permet au propriétaire du mot de passe de mémoriser facilement les positions sélectionnées des modifications.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014204332